# EUROPÄISCHE PATENTSCHRIFT

(11) **EP 0 459 125 B1**
(45) Veröffentlichungstag und Bekanntmachung des Hinweises auf die Patenterteilung: **12.07.1995**
(21) Anmeldenummer: 91106002.8
(22) Anmeldetag: 16.04.1991
(51) Int. Cl.: C08G 18/38, C08G 18/32, C08G 18/80, C07C 319/14, C07C 317/18, C07C 311/04, D06M 15/576

(54) **Verfahren zur Herstellung von Perfluoralkylreste enthaltenden Diolen und Polyurethanen**
Process for the preparation of diols containing perfluoroalkylrests and polyurethanes.
Procédé de préparation de diols contenant des restes perfluoroalkyles et polyurethanes.

(30) Priorität: 21.05.1990 DE 4016329
(43) Veröffentlichungstag der Anmeldung: 04.12.1991
(73) Patentinhaber: Pfersee Chemie GmbH, 86460 Langweid a. Lech (DE)
(72) Erfinder: Mosch, Franz, W-8901 Diedorf (DE); Lüdemann, Simpert, W-8903 Bobingen (DE); Bernheim, Michael, Dr., W-8901 Aystetten (DE)

(56) Entgegenhaltungen:
- EP-A- 0 348 350

## Beschreibung

Gegenstand der vorliegenden Erfindung sind ein Verfahren zur Herstellung Von Perfluoralkylreste enthaltenden Diolen und Polyurethanen, die nach diesem Verfahren herstellbaren Polyurethane und die Verwendung der Polyurethane in Form von wäßrigen Dispersionen zur Behandlung von Fasermaterial, insbesondere von Textilien.

Aus der EP-A 348.350 sind Perfluoralkylreste enthaltende Polymere, wie Polyurethane, Polyharnstoffe, Polyester und Polycarbonate bekannt. Zur Herstellung dieser Polymere dienen als Ausgangsverbindungen Perfluoralkylreste enthaltende Diole der allgemeinen Formel III A 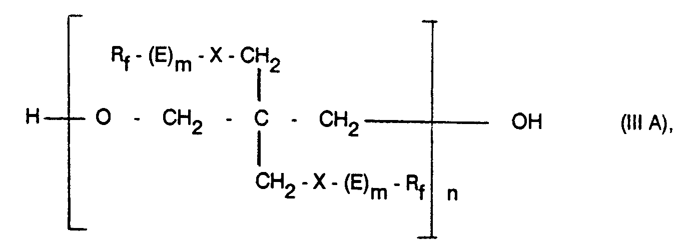
in welchen R_{f} ein geradkettiger oder verzweigtkettiger Perfluoralkylrest mit 1 bis 18 C-Atomen ist, der gegebenenfalls durch einen Perfluoralkoxyrest mit 2 bis 6 C-Atomen substituiert ist, und E ein verzweigter oder geradkettiger Alkylenrest mit 1 bis 10 Kohlenstoffatomen ist, der gegebenenfalls durch 1 bis 3 Gruppen unterbrochen ist, nämlich durch jeweils zweiwertige Brückenglieder der Formel -NR-,-O-,-S-,-SO2-,-COO-,-OOC-,-CONR-,-NRCO-,-SO2NR- und -NRSO₂-, und der gegebenenfalls an einem Ende eine -SO₂NR- oder -CONR-Gruppe aufweist, wobei der Rest R_{f} mit dem Schwefelatom oder dem Kohlenstoffatom dieser Gruppe verknüpft ist, m = 0 oder 1 ist, und für den Fall m = 0 X = -S-, -O-, -SO₂- oder -NR- sowie für m = 1 X = -CONR- oder - SO2NR- sein kann, wobei R_{f} mit dem Schwefelatom oder dem Kohlenstoffatom verknüpft ist und R einen Alkylrest mit 1 bis 6 C-Atomen bedeutet, sowie n = 1, 2 oder 3 ist. Zur Herstellung von Polyurethanen werden diese Perfluoralkylreste enthaltenden Diole mit Di- oder Polyisocyanaten und anschließend nochmals zusammen mit Kettenverlängerungsmitteln und weiteren Di- oder Polyisocyanaten zu Polyurethanen umgesetzt. Die aus diesem Stande der Technik bekannten Polymeren zeigen verbesserte thermische Stabilität, ergeben öl- und wasserabweisende Ausrüstungen und Beschichtungen sowie "Soil-Release"-Eigenschaften auf verschiedenen Materialien, wie Textilien, Glas, Papier oder Leder.

Die Perfluoralkylreste enthaltenden Diole der allgemeinen Formel III A werden gemäß EP-A 348 350 durch Umsetzung von Verbindungen der allgemeinen Formel I A

R_{f} - (E)ₘ - X - H (I A)

mit mindestens 2 Halogenatome enthaltenden Diolen der allgemeinen Formel II A

HO [CH₂C(CH₂Y)₂CH₂O]ₙ -H (II A)

wobei Y = Br, Cl oder J ist und R_{f}, E, X, m und n die obengenannte Bedeutung haben, über eine nukleophile Substitution erhalten.

Die nach dieser ersten Reaktionsstufe erhaltenen Verbindungen der Formel III A werden dann im Falle der Herstellung von Polyurethanen in Substanz oder gelöst in einem Lösungsmittel in einer zweiten Reaktionsstufe mit mehrwertigen Isocyanaten zunächst zu Präpolymeren mit freien Hydroxyl- bzw. freien Isocyanatgruppen umgesetzt, je nachdem, ob das Isocyanat zu den Hydroxylgruppen der in Rede stehenden Diole im stöchiometrischen Unter- bzw. Überschuß eingesetzt wird.

In einer weiteren, der 3. Reaktionsstufe, werden diese Präpolymeren in bekannter Weise mit weiterem Isocyanat bzw. Hydroxylgrupen enthaltendem Kettenverlängerungsmittel oder auch mit deren Kombination zu den gewünschten Perfluoralkylgruppen enthaltenden Polyurethanen umgesetzt (vgl. hierzu z.B. auch U.S.-A 4 054 592).

Wie diese Ausführungen zeigen, werden die nach dem Stande der Technik erhältlichen Perfluoralkylgruppen enthaltenden Polyurethane in einer dreistufigen Reaktion erhalten, nämlich:
1. Stufe: Umsetzung von Verbindungen der allgemeinen Formel I A mit Verbindungen der allgemeinen Formel II A, wobei Verbindungen der allgemeinen Formeln III A erhalten werden.
2. Stufe: Weitere Umsetzung der Perfluoralkylgruppen enthaltenden Diole III A mit einem stöchiometrischen Unter- bzw. Überschuß an Di- und/oder Polyisocyanaten, wobei Präpolymere mit freien Hydroxyl- bzw. Isocyanatgruppen entstehen und
3. Stufe: Weitere Umsetzung der Präpolymeren mit weiterem Isocyanat bzw. Hydroxylgruppen enthaltendem Kettenverlängerungsmittel oder auch mit deren Kombination zu den gewünschten Polyurethanen.

Diese Polyurethane können in bekannter Weise in wäßrige Dispersionen überführt werden.

Wie der erwähnte Stand der Technik lehrt, wird die 1. Reaktionsstufe, soweit die Verbindungen I A ein hinreichend azides Wasserstoffatom aufweisen, unter wasserfreien Bedingungen in einem aprotischen Lösungsmittel bei erhöhter Temperatur in Gegenwart von festem Alkalicarbonat, insbesondere Kaliumcarbonat, durchgeführt und anschließend werden die entstandenen Verbindungen der Formel III A isoliert.

Als Verbindungen mit hinreichend azidem Wasserstoffatom kommen solche der allgemeinen Formel I A in Betracht

R_{f} - (E)ₘ - X - H (I A)

in welchen R_{f}, E, X und m die oben zu Formel III A angegebene Bedeutung haben.

Der Nachteil des in der EP-A 0 348 350 beschriebenen Verfahrens zur Herstellung der Diole der Formel (III A) (erste Reaktionsstufe) besteht darin, daß die Reaktion der in einem Lösungsmittel gelösten Verbindungen der allgemeinen Formel I A mit den Verbindungen der Formel II A in Gegenwart von festem Alkalicarbonat unter wasserfreien Bedingungen ungewöhnlich lange dauert. So sind beispielsweise für die Reaktion von Perfluoralkylethylthiolen (Formel I A: E = -CH₂CH₂-, X = -S-) mit 2,2-Bis-(brommethyl)-1,3-propandiol (Formel II A: Y = Br, n = 1) Reaktionszeiten von 16 h und mehr bei ca. 100°C angegeben. Anschließend muß das entstandene KBr durch Auswaschen oder Filtration in der Wärme entfernt werden. Es hat sich gezeigt, daß sich beim Auswaschen mit Wasser die wäßrige Phase erst nach langem Stehen, und zwar als obere Schicht, abtrennt. Sie muß dann von oben abgesaugt werden oder die organische Phase in ein entsprechend dimensioniertes Gefäß abgelassen werden. Häufig ist auch ein einmaliges Auswaschen ungenügend, so daß ein zweites Mal nachgewaschen werden muß, was sehr zeitaufwendig ist. Auch bei der Heißfiltration ergeben sich Schwierigkeiten, da sich beim Abkühlen schon leicht in der Lösung wegen Überschreitung der Löslichkeitsgrenze Abscheidungen des gewünschten Produktes ergeben und damit eine Filtration nicht mehr möglich ist.

Der vorliegenden Erfindung lag die Aufgabe zugrunde, das oben beschriebene Verfahren des Standes der Technik zur Herstellung von Perfluoralkylresten enthaltenden Diolen und Polyurethanen zu verbessern. Die Lösung der Aufgabe besteht gemäß Anspruch 1 in einem Verfahren zur Herstellung von Perfluoralkylreste enthaltenden Diolen, wobei (erste Reaktionsstufe)
Verbindungen der allgemeinen Formel (I)

R_{f}-(E)ₘ-X'-H (I)

worin m = 0 oder 1 und R_{f} ein geradkettiger oder verzweigtkettiger Perfluoralkylrest mit 1 bis 18 C-Atomen sind, der gegebenenfalls durch einen Perfluoralkoxyrest mit 2 bis 6 C-Atomen substituiert ist, worin E ein verzweigter oder geradkettiger Alkylenrest mit 1 bis 10 Kohlenstoffatomen ist, der gegebenenfalls durch 1 bis 3 Gruppen unterbrochen ist, nämlich durch jeweils zweiwertige Brückenglieder der Formeln
-NR-,-O-,-S-,-SO₂-,-COO-,-OOC-,-CONR-,-NRCO-,-SO₂NR- und -NRSO₂-, und der gegebenenfalls an einem Ende eine -SO₂NR- oder eine -CONR-Gruppe aufweist, wobei der Rest R_{f} mit dem Schwefelatom oder dem Kohlenstoffatom dieser Gruppe verknüpft ist, wobei X'-H = -CON(R)H oder SO₂N(R)H oder -SH ist und R einen Alklylrest mit 1 bis 6 C-Atomen bedeutet, mit Verbindungen der allgemeinen Formel II

HO [CH₂-C(CH₂Y)₂CH₂O]ₙH (II)

worin Y = Cl, Br oder J bedeuten und n = 1, 2 oder 3 ist und wobei je Mol-Äquivalent Y der Formel II ca. 1 Mol der Verbindung der Formel I eingesetzt werden, in Gegenwart von Alkalicarbonat in einer Menge, die zur im wesentlichen vollständigen Neutralisation der entstehenden Säure HY ausreicht, in einem aprotischen Lösungsmittel bei erhöhter Temperatur zu Diolen der Formel III 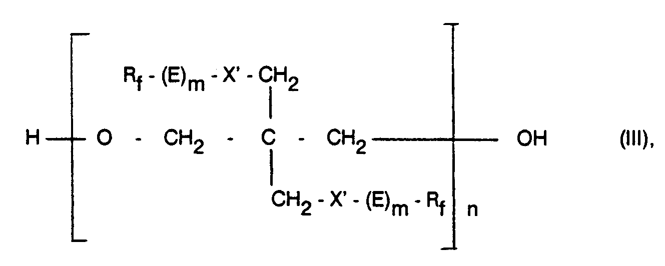
umgesetzt werden, dadurch gekennzeichnet, daß man die Umsetzung bei einer Temperatur im Bereich von 90 bis 140°C in einem in Wasser im wesentlichen unlöslichen, aprotischen Lösungsmittel in Gegenwart einer wäßrigen Lösung des Alkalicarbonates, gegebenenfalls in Gegenwart eines Phasengrenzflächen-Katalysators durchführt, wobei das aprotische Lösungsmittel so ausgewählt ist, daß aus ihm beim Erhitzen in Gegenwart der wäßrigen Alkalicarbonat-Lösung keine Produkte gebildet werden, die waserlöslich sind oder mit den Verbindungen der Formel I oder II reagieren oder die das entstehende Alkalihalogenid lösen, daß man anschließend die sich abscheidende wäßrige Salzlösung abtrennt und das verbleibende Restwasser und gegebenenfalls das Lösungsmittel entfernt,
und gemäß Patentanspruch 2 in einem Verfahren zur Herstellung von Polyurethanen, das dadurch gekennzeichnet ist, daß man zuerst das oben und in Anspruch 1 beschriebene Verfahren durchführt und dann die nach der ersten Stufe erhaltenen Umsetzungsprodukte (Diole) der Formel III ohne Zwischenisolierung in einer 2. Stufe mit zwei-, drei- oder mehrwertigen aliphatischen, alicyclischen oder aromatischen Isocyanaten, insbesondere mit zweiwertigen Isocyanaten der Formel IV

A (NCO)₂ (IV)

worin A für einen,ggfs. substituierten, aliphatischen, alicyclischen oder aromatischen zweiwertigen Rest steht, in einem Lösungsmittel zu Präpolymeren umgesetzt werden, die noch freie Hydroxyl- oder freie Isocyanatgruppen enthalten, und daß
in einer 3. Stufe diese Präpolymeren ohne Zwischenisolierung mit weiterem zwei-, drei- oder mehrwertigem, aliphatischen, alicyclischen oder aromatischen Isocyanat, insbesondere mit zweiwertigem Isocyanat der Formel

A' (NCO)(₂ (IV')

worin A' die gleiche Bedeutung wie A hat, oder mit einem mindestens 2 Hydroxylgruppenenthaltendem Kettenverlängerungsmittel oder auch einer Kombination aus weiterem Isocyanat und einem solchen Kettenverlängerungsmittel in einem Lösungsmittel zu Perfluoralkylgruppen enthaltenden Polyurethanen umgesetzt werden und daß gegebenenfalls anschließend das Lösungsmittel entfernt wird.

Die Verbindungen der Formel I im Patentanspruch 1 unterscheiden sich von den Verbindungen der Formel I A (Stand der Technik) durch die Definition von X' anstelle von X, wodurch zum Ausdruck gebracht wird, daß die Verbindungen der Formel I ein hinreichend azides Wasserstoffatom aufweisen müssen. Entsprechend geht auch in die Formel III die Bedeutung von X' ein. Die Gruppe -X'- H in Formel I (siehe Anspruch 1) steht für eine der Gruppierungen -CON (R)H oder SO₂N (R) H oder -SH. In all diesen Fällen ist das Wasserstoffatom hinreichend azid, damit die Umsetzung mit der Verbindung der Formel II unter Abspaltung von HY ablaufen kann.

Beim erfindungsgemäßen Verfahren, das oben und in Anspruch 1 beschrieben ist, steht der zweiwertige Rest X' in den Formeln (I) und (III) für - CON (R) -, - SO₂N(R) - oder für - S -. In den entsprechenden Verbindungen (I A) und (III A), die aus der EP-A 348 350 bekannt sind, kann der zweiwertige Rest X dagegen auch noch für andere Gruppierungen stehen, z.B. für - NR -. Von diesem Unterschied abgesehen entsprechen die beim erfindungsgemäßen Verfahren eingesetzten Verbindungen (I) und (II) sowie die in der ersten Stufe erhaltenen Diole der Formel (III) in ihren chemischen Strukturen exakt den eingangs genannten analogen Verbindungen (I A), (II A) und (III A), die aus der EP-A 348 350 bekannt sind.

Die Angabe in Patentanspruch 1, wonach E unter anderem durch
-COO- oder -OOC-
bzw. -CONR- oder -NRCO-
bzw. -SO₂NR- oder -NRSO₂-
unterbrochen sein kann, bedeutet, daß es sich bei diesen drei Paaren zwar um jeweils untereinander gleiche zweiwertige Reste handelt, daß aber dem Rest R_{f} wahlweise das eine oder das andere Ende des betreffenden Restes zugewandt sein kann.

Überraschenderweise hat sich gezeigt, daß die Reaktion der 1. Stufe (Herstellung der Diole der Formel (III)) sehr viel schneller verläuft und damit das Verfahren sehr viel wirtschaftlicher gestaltet werden kann, wenn man in dieser Stufe als Lösungsmittel für die Verbindungen der Formel I und die Verbindungen der Formel II ein in Wasser im wesentlichen unlösliches, aprotisches Lösungsmittel verwendet und das zur Reaktion benötigte Alkalicarbonat, insbesondere Kaliumcarbonat, in Wasser löst, also eine 2-Phasenreaktion flüssig/flüssig durchführt. Diese Reaktion verläuft in einer gegenüber den Angaben des Standes der Technik wesentlich verkürzten Zeit. Ganz besonders überraschend ist aber, daß die Aufarbeitung der 2-phasigen Reaktionslösung außerordentlich vereinfacht ist. Die Konzentration der verwendeten Alkalicarbonatlösung (insbesondere des Kaliumcarbonats) in Wasser wird dabei zweckmäßigerweise mindestens so hoch gewählt, daß die Dichte der sich bei der Reaktion bildenden Alkalihalogenid-Lösung (insbesondere des Kaliumbromids) nach Beendigung der Reaktion so groß ist, daß sich die wäßrige Phase als untere Phase abscheidet. Die wäßrige Phase scheidet sich in diesem Fall nach beendeter Reaktion schon in der Wärme rasch und vollständig als untere Phase ab und kann leicht abgetrennt werden.

Es hat sich als sehr vorteilhaft erwiesen, die Abtrennung der wäßrigen Phase bereits in der Wärme, d.h. bei Temperaturen nur wenige °C-Grade unter dem Siedepunkt des Reaktionsgemisches der 1. Stufe vorzunehmen, da hierbei Ausscheidungen von Reaktionsprodukten in der organischen Phase vermieden werden können und sich auch aus der wäßrigen Phase kein Alkalihalogenid, wie z.B. Kaliumbromid abscheidet.

Die leichte Abtrennbarkeit der wäßrigen Phase ist gerade im Hinblick auf die Ausführungen in der bereits zitierten EP-A 348 350 besonders überraschend, da hiernach zwar das Arbeiten mit einem wäßrigen System als Möglichkeit angegeben ist, doch die Aufarbeitung solch eines Systems als schwierig bezeichnet wird. Durch die Verwendung eines in Wasser im wesentlichen unlöslichen Lösungsmittels und die bevorzugte Verwendung der Alkalicarbonat-Lösung in einer Konzentration, die die Abtrennung der gebildeten Alkalihalogenid-Lösung als untere Phase erlaubt, werden erfindungsgemäß diese Schwierigkeiten umgangen.

Die erhaltenen Lösungen, die als Reaktionsprodukte die Verbindungen der Formel III enthalten, werden, z.B. mittels azeotroper Destillation, von geringen Restmengen an Wasser befreit und können ohne weitere Maßnahmen, allenfalls nach Einstellen auf eine gewünschte Konzentration durch Nachsetzen von Lösungsmittel, unmittelbar, d.h.ohne weitere Reinigungsschritte, insbesondere ohne Isolierung der Reaktionsprodukte, zur Umsetzung mit den Isocyanaten in der 2. Stufe (Patentanspruch 2) herangezogen werden. Es ist jedoch auch möglich, aus den in der ersten Reaktionsstufe erhaltenen Lösungen, welche Diole der Formel (III) enthalten, das Lösungsmittel zu entfernen und die Diole zu isolieren, was z.B. dann angebracht sein kann, wenn die Diole für andere Zwecke als für die Weiterreaktion mit Isocyanaten verwendet werden sollen.

Von den Verbindungen mit der allgemeinen Formel I werden wegen ihrer leichten Zugänglichkeit solche Verbindungen bevorzugt, in denen m = 1, E eine Alkylenbrücke mit 2 bis 6 C-Atomen und X' = -S- sind. Es versteht sich von selbst, daß es sich bei den Perfluoralkylreste enthaltenden Verbindungen mit 1 bis 18 perfluorierten C-Atomen, wobei der Perfluoralkylrest gegebenenfalls durch einen Perfluoralkoxyrest mit 2 bis 6 C-Atomen substituiert ist, nicht um chemisch einheitliche Verbindungen mit einer bestimmten Kettenlänge, sondern - technisch bedingt -, um Mischungen von Perfluoralkylreste enthaltenden Verbindungen handelt. Bevorzugt werden hier Verbindungen, die einen perfluorierten Alkylrest mit durchschnittlich 6 bis 14 C-Atomen enthalten.

Hinsichtlich der mindestens 2 Halogenatome enthaltenden Diole der allgemeinen Formel II bestehen gegenüber dem Stande der Technik keine Einschränkungen. Demzufolge haben die Formeln II und II A die gleiche Bedeutung. Die Kennzeichnung I, II, III (Erfindung) bzw. I A, II A und III A (Stand der Technik) wurde gewählt, um den Unterschied zwischen Stand der Technik und Erfindung zu verdeutlichen. Auch erfindungsgemäß werden aus praktischen Gründen der Di-(2,2-bisbrommethyl-3-hydroxy-n-propyl)-ether (Formel II: Y = Br, n = 2) und insbesondere das 2,2-Bis-(brommethyl)-1,3-propandiol (Formel II: Y = Br, n = 1) bevorzugt. Das Alkalicarbonat, wobei Kaliumcarbonat bevorzugt ist, wird in Form einer konzentrierten wäßrigen Lösung eingesetzt, und zwar in einer Menge. die den abspaltbaren Halogenatomen der Verbindungen II in etwa äquivalent ist, d.h. die zur im wesentlichen vollständigen Neutralisation der entstehenden Säure HY ausreicht, bevorzugt sogar in einem geringen Überschuß.

Auch die Verbindungen der Formel I werden in einer solchen Menge eingesetzt, daß die Menge an aktiven Wasserstoffatomen in den Verbindungen I der Menge an abspaltbaren Halogenatomen der Verbindung II äquivalent ist.

Besondere Bedeutung kommt im Rahmen der 1. Stufe (Herstellung der Diole der Formel (III)), des erfindungsgemäßen Verfahrens der Auswahl des Lösungsmittels zu. Während nach dem Stande der Technik (EP-A 348 350) allgemein aprotische Lösungsmittel, wie N-Methylpyrrolidon, N,N-Dimethylformamid, Dimethylsulfoxid und ähnliche sowie Ketone, wie Aceton oder andere Dialkylketone in Betracht kommen, müssen die im Rahmen des erfindungsgemäßen Verfahrens eingesetzten aprotischen Lösungsmittel in Wasser im wesentlichen unlöslich sein. Darüber hinaus dürfen sie in Gegenwart der wäßrigen Alkalicarbonat-Lösungen beim Erhitzen keine Veränderungen der Art erleiden, daß Produkte gebildet werden, die wasserlöslich sind oder die mit den Verbindungen der Formeln I oder II reagieren oder die das entstehende Alkalihalogenid lösen. Aus diesem Grunde scheiden praktisch Ester als Lösungsmittel wegen der Gefahr der Verseifung aus. Schließlich ist es vorteilhaft, wenn das verwendete Lösungsmittel einen Siedepunkt über 90°C, insbesondere über 110°C aufweist. Dies ist deshalb von Bedeutung, da sich beim Erhitzen der Lösungsmittel in Gegenwart der wäßrigen Alkalicarbonat-Lösung relativ niedrig siedende Azeotrope bilden können, was zu einer Verlängerung der Reaktionszeit führt.

Aus dem gleichen Grunde ist es zweckmäßig, aber nicht unbedingt erforderlich, bei der Durchführung der 1. Reaktionsstufe nach dem erfindungsgemäßen Verfahren in einem geschlossenen Gefäß zu arbeiten, da auf diese Weise ohne weiteres bei Temperaturen von 100°C bis etwa 140°C gearbeitet und damit eine Beschleunigung der Reaktion erreicht werden kann. Es ist nicht erforderlich, den Druck durch Aufpressen von Inertgasen, z.B.von Stickstoff zu erhöhen, vielmehr stellt sich der Druck je nach dem Siedepunkt des verwendeten Lösungsmittels, der gewünschten Reaktionstemperatur und durch das bei der Reaktion freiwerdende Kohlendioxid von selbst ein. Zur Vermeidung unnötig hoher Drücke ist es auch aus diesem Grund zweckmäßig, wasserunlösliche, aprotische Lösungsmittel mit einem Siedepunkt über 90°C, insbesondere über 110°C, auszuwählen.

Darüber hinaus müssen selbstverständlich die Lösungsmittel die Fähigkeit haben, sowohl die Ausgangsverbindungen der Formeln I und II als auch die Reaktionsprodukte der Formel III hinreichend zu lösen.

Unter all diesen genannten Gesichtspunkten haben sich Ketone besonders bewährt. Als solche mit einem Siedepunkt über 90°C seien das Methyl-n- und -iso-propylketon und das Diethylketon, als solche mit einem Siedepunkt über 110°C das Ethyl-iso-propyl-, das Methyl-iso-butyl-, das Ethyl-n-propyl-, das Di-iso-propylketon sowie die verschiedenen Amylketone genannt. Aus praktischen Gründen wird unter allen genannten Lösungsmitteln dem Methyl-iso-butylketon der Vorzug gegeben. Es hat sich bewährt, die Reaktion in Gegenwart geringer Mengen an bekannten Phasengrenzflächenkatalysatoren durchzuführen. Hierbei wird quaternären Ammoniumverbindungen der Vorzug gegeben.

Der Reaktionsansatz, der die Verbindungen I und II, die wäßrige Alkalicarbonatlösung in den angegebenen Mengenverhältnissen, das Lösungsmittel und gegebenenfalls einen Grenzflächenkatalysator enthält, wird unter Rühren auf 90 - 140°C, insbesondere 100 - 120°C, vorzugsweise in einem geschlossenen Reaktionsgefäß aufgeheizt und ca. 3 bis 8 Stunden bei dieser Temperatur belassen, wobei sich beim Arbeiten in einem geschlossenen Gefäß ein autogener Druck von ca. 3 bis 6 bar (absolut) einstellt.
Nach Abstellen des Rührers scheidet sich die wäßrige Phase infolge ihres hohen Salzgehaltes als untere Phase rasch ab und kann schon ohne oder nach nur geringfügiger Abkühlung gut und im wesentlichen vollständig abgetrennt werden.

Aus der organischen Phase, welche als Reaktionsprodukte die perfluoralkylsubstituierten Diole der Formel III enthält, wird das in geringen Mengen noch enthaltene Wasser, gegebenenfalls nach Zusatz von weiterem Lösungsmittel, entfernt, z.B. durch azeotrope Destillation. Die erhaltene Lösung eignet sich zur Herstellung von Polyurethanen gemäß Patentanspruch 2 und wird dazu vorzugsweise direkt, d.h. ohne weitere Aufarbeitung, gegebenenfalls nach Einstellen auf einen gewünschten Feststoffgehalt durch Zusatz von weiterem Lösungsmittel, für die weitere Umsetzung mit dem Di- oder Polyisocyanat in der zweiten Reaktionsstufe verwendet. Das heißt, es findet vorzugsweise keine Zwischenisolierung der Diole der Formel (III) statt, bevor Verfahrensstufe 2 von Patentanspruch 2 durchgeführt wird. Das Verfahren gemäß Anspruch 2, d.h. die bevorzugte weitere Umsetzung der gemäß Anspruch 1 erhaltenen gelösten Diole zu Polyurethanen, wird im Folgenden näher beschrieben.

Als Di- und/oder Polyisocyanate für die Umsetzung der 2. Stufe kommen praktisch die gleichen in Betracht, wie sie in dem mehrfach erwähnten Stande der Technik genannt sind, nämlich sowohl aliphatische und alicyclische, als auch aromatische Di-, Tri- und Polyisocyanate. Bevorzugt sind Diisocyanate der allgemeinen Formel IV

A(NCO)₂ (IV),

da mit drei- oder mehrwertigen Isocyanaten leicht unlösliche, unbrauchbare Produkte erhalten werden. A stellt hierbei einen zweiwertigen, ggf. substituierten, aliphatischen, alicyclischen oder aromatischen Rest dar.

Als Diisocyanate der allgemeinen Formel IV können aliphatische mit einer Alkylenkette von 2 bis 16 C-Atomen, alicyclische mit 6 bis 15 C-Atomen im Ring und aromatische, gegebenenfalls substituierte, z.B. durch Alkylreste oder Alkoxyreste mit 1 bis 4 C-Atomen, Halogen- oder Nitrogruppen substituierte Phenylen- oder Naphtylen-Diisocyanate eingesetzt werden. A kann aber auch den Rest 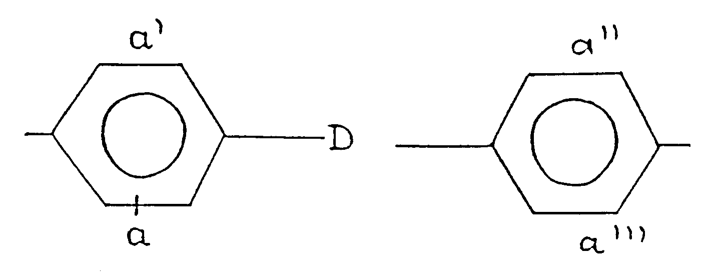
bedeuten, wobei D eine direkte Bindung, eine Sauerstoff-, Methylen- oder Ethylenbrücke ist und a, a', a'' und a''' unabhängig voneinander Wasserstoff, Alkyl- oder Alkoxyreste mit 1 bis 4 C-Atomen, Chlor oder Brom bedeuten.

Zur Umsetzung in der 2. Reaktionsstufe wird die nach der ersten Stufe erhaltene und ggf. durch Zusatz von Lösungsmittel auf einen gewünschten Feststoffgehalt eingestellte Lösung, die die perfluoralkylsubstituierten Diole der Formel III enthält, mit der gewünschten Menge an Isocyanat, vorzugsweise mit einem der Formel IV versetzt. Es ist ratsam, die Reaktion unter Inertbedingungen durchzuführen und durch Zugabe von aus der Urethanchemie bekannten Katalysatoren, wie sie in der genannten EP-A 348 350 im einzelnen aufgezählt sind, bei erhöhter Temperatur, d.h. bei etwa 60 bis 80° C, in Gang zu bringen bzw. zu beschleunigen. Im Rahmen des erfindungsgemäßen Verfahrens hat sich als Katalysator eine Kombination aus organischen Zinnverbindungen unter Zusatz von tertiären Aminen besonders bewährt. Die Reaktion selbst macht sich deutlich durch Ansteigen der Temperatur bemerkbar. Nach Abklingen der Reaktion wird noch für ca. 1/2 bis 1 Stunde bei erhöhter Temperatur nachgerührt.
Wie oben schon erwähnt, wird die Menge an Isocyanat so bemessen, daß bei dieser 2. Reaktionsstufe Präpolymere entstehen, die noch freie Hydroxylgruppen bzw. freie Isocyanatgruppen enthalten, d.h., daß das Isocyanat im Unterschuß bzw. Überschuß angewandt wird. Auf diese Weise ist es möglich, in Verbindung mit der Reaktion in der 3. Stufe die gewünschten Eigenschaften, wie z.B. die Emulgierbarkeit der Polyurethane und ihre anwendungstechnischen Eigenschaffen zu beeinflussen.

Bevorzugt werden mittels Verwendung eines Unterschusses an Isocyanatgruppen gegenüber den Hydroxylgruppen der Diole der Formel III Präpolymere mit freien Hydroxylgruppen hergestellt, da hierdurch unter anderem der Reaktionsverlauf der zweiten Stufe, nämlich bis zum Verschwinden der NCO-Gruppen, nachgewiesen beispielsweise über IR-Spektroskopie, sehr einfach verfolgt werden kann. Es hat sich als zweckmäßig erwiesen, bezogen auf 1 Mol Diisocyanat der Formel IV 1,1 bis 1,6 Mol, insbesondere 1,2 bis 1,4 Mol an Verbindungen der Formel III einzusetzen; das bedeutet, daß die nach der Reaktion der zweiten Reaktionsstufe in Form von Lösungen vorliegenden Präpolymeren 0,2 bis 1,2, insbesondere 0,4 bis 0,8 Hydroxyläquivalente je Mol aus den Verbindungen III und den Verbindungen IV erhaltenem Umsetzungsprodukt aufweisen.

Entsprechende Überlegungen gelten umgekehrt, wenn Präpolymere, die noch freie Isocyanatgruppen enthalten, hergestellt werden sollen; in diesem Fall werden die Lösungen, in denen die perfluoralkylsubstituierten Diole der Formel III enthalten sind, mit einem Überschuß an Isocyanatgruppen umgesetzt.

Für die Umsetzung in der zweiten Reaktionsstufe haben sich als Isocyanate der Formel IV das Hexamethylendiisocyanat und das Trimethylhexamethylendiisocyanat (Isomerengemisch) besonders bewährt.

So wie nach der ersten Stufe die Zwischenprodukte der Formel III nicht isoliert werden müssen, ist es ebenfalls nicht erforderlich, die in Form von Lösungen vorliegenden Präpolymeren, die in der 2. Reaktionsstufe entstehen, vor der Durchführung der 3. Reaktionsstufe zu isolieren; d.h. diese Lösungen können direkt für die weitere Umsetzung in der 3. Reaktionsstufe eingesetzt werden.

Die direkte Umsetzung von Hydroxylgruppen enthaltenden Präpolymeren mit Isocyanaten in der 3. Stufe kann zu in allen herkömmlichen Lösungsmitteln unlöslichen und auch schwierig zu emulgierenden Perfluoralkylreste enthaltenden Polyurethanen führen. Es ist deshalb zweckmäßig, aus der Polyurethanchemie bekannte Kettenverlängerungsmittel zusammen mit den Isocyanaten einzusetzen. Als solche Kettenverlängerungsmittel kommen vor allem Polyole in Betracht, insbesondere Kettenverlängerungsmittel mit 2 Hydroxylgruppen. Auch in diesem Zusammenhang bestehen gegenüber den in der EP-A 348 350 genannten Kettenverlängerungsmitteln keine Einschränkungen. Genannt seien Alkandiole mit 2 bis 16 C-Atomen, wie das Ethylen- und Propylenglykol, das 1,4-Butandiol und die entsprechenden höheren Homologen, aber auch das Di-, Tri- und Tetraethylenglykol, der Bis(4-hydroxybutyl)ether und der Bis-hydroxyethyl-thioether. Besondere Bedeutung kommt solchen Diolen zu, die mindestens 1 tertiäres Stickstoffatom eingebaut enthalten. Hierunter sind Alkandiole zu verstehen, deren Alkylenrest durch 1 bis 3 -N(R')-Brückenglieder unterbrochen ist, wobei R'einen Alkylrest mit 1 bis 18 C-Atomen, den Cyclohexyl-, Tolyl-, Naphthyl- oder Pyridylrest bedeutet. Stellvertretend genannt seien das N-Methyl-, N-Butyl-, N-Oleyl-, N-Cyclohexyl-diethanolamin und die entsprechenden Dipropylamine, das N,N-Dihydroxyethylanilin und das N,N'-Bis-hydroxypropylethylendiamin.
Generell gilt für die einsetzbaren Diole, also auch für solche, in denen der Alkylenrest durch 1 bis 3-N(R')-Brückenglieder unterbrochen ist, daß auch deren Alkoxylierungsprodukte eingesetzt werden können, wie mit Polyethylenglykol mit einem Molgewicht von 200 bis etwa 4000 ethoxylierte Produkte, oder auch ethoxyliertes Butyl-diethanolamin und propoxyliertes Methyldiethanolamin (Molgewicht 2000). Für die Umsetzung der 3. Stufe haben sich das N-Methyldiethanol- und das N-Butyldiethanolamin besonders bewährt.

Für den Fall, daß in der zweiten Stufe mit einem Überschuß an Diisocyanat gearbeitet wird, so daß Präpolymere mit freien Isocyanatgruppen entstehen, werden diese in der dritten Stufe mit einem mindestens 2 Hydroxylgruppen enthaltendem Kettenverlängerungsmittel umgesetzt. Für diesen Fall sind die gleichen Kettenverlängerungsmittel geeignet bzw. bevorzugt, wie sie oben für den Fall von Präpolymeren mit freien Hydroxylgruppen beschrieben wurden.

Geht man für die Umsetzung der 3. Stufe von Lösungen von Präpolymeren aus, die freie Hydroxylgruppen enthalten, was bevorzugt ist, so wird die Menge an Kettenverlängerungsmittel und Isocyanat, insbesondere Diisocyanaten der Formel IV'

A'(NCO)₂ (IV')

worin A' die gleiche Bedeutung wie A (siehe Formel IV) hat, so aufeinander abgestimmt, daß Perfluoralkylgruppen enthaltende Polyurethane entstehen, die im wesentlichen keine freien Isocyanatgruppen mehr enthalten. Gegebenenfalls werden in geringem Umfang noch vorhandene Isocyanatgruppen in üblicher Weise abreagiert. Geringe Anteile an Hydroxylgruppen in den Polyurethanen stören im allgemeinen nicht.
Angenommen, das Präpolymer weise ein Hydroxyläquivalent von 0,4 je Mol auf und es sollen 0,6 Mol Diisocyanat A' (NCO)₂ eingesetzt werden, so berechnet sich der Bedarf an als Kettenverlängerungsmittel dienendem Diol auf 0,4 Mol. Soll dagegen bei dem gleichen Präpolymer 1 Mol der Verbindung A'(NCO)₂ eingesetzt werden, dann sind von dem Diol 0,8 Mol erforderlich. Allgemein ausgedrückt soll das Mol-Verhältnis der Verbindung A(NCO)₂ zu A'(NCO)₂ bei 0,3 bis 1,8, insbesondere bei 0,6 bis 1,6 liegen.

Die Diisocyanate der Formel IV' können aus den gleichen Verbindungsklassen ausgewählt werden wie sie schon oben bei der Formel IV erläutert wurden. Doch werden für diese 3. Reaktionsstufe alicyclische mit 6 bis 15 C-Atomen im Ring bevorzugt. Besonders bewährt haben sich in dieser 3. Reaktionsstufe die von "Dimersäuren", d.h. von dimerisierten, ungesättigten Fettsäuren abgeleiteten Diisocyanate. Ein solches Diisocyanat wird im Handel unter der Bezeichnung "DDI 1410 Diisocyanat® (Henkel Corp.) angeboten.

Wie schon erwähnt, können die Lösungen, die die Präpolymeren der zweiten Stufe enthalten, ohne Zwischenisolierung der Präpolymeren direkt für die Umsetzung in der 3. Stufe verwendet werden, ja es ist in der Regel noch nicht einmal erforderlich, die Lösungen, die von der Umsetzung der 2. Stufe noch eine erhöhte Temperatur aufweisen, vor der weiteren Reaktion der 3. Stufe abzukühlen.

In diese Lösungen werden die erforderliche Menge an Isocyanat IV' und Hydroxylgruppen enthaltendem Kettenverlängerungsmittel, zweckmäßig mit Lösungsmittel verdünnt, eingerührt. Die Reaktionsmischung der 3. Stufe wird so lange bei erhöhter Temperatur, ca. 60° bis 90°C, belassen, bis keine NCO-Gruppen mehr nachweisbar sind. Damit ist die Bildung des Polyurethans abgeschlossen.

Die Umsetzungen der 2. und 3. Stufe werden ebenfalls in einem Lösungsmittel, vorzugsweise dem gleichen wie für die erste Stufe verwendeten, durchgeführt.

Die nach dem erfindungsgemäßen Verfahren erhaltenen Perfluoralkylreste enthaltenden Polyurethane sind in ihren Eigenschaften den aus der EP-A 348 350 bekannten Polyurethanen ähnlich.

Das Polyurethan kann durch Abdestillieren des aprotischen Lösungsmittels isoliert werden.

In der Regel werden diese Lösungen aber in bekannter Weise in wäßrige Dispersionen überführt. Dabei ist es zweckmäßig, das Lösungsmittel erst nach der Dispergierung in Wasser in bekannter Weise, d.h. durch Abdestillieren, vorzugsweise unter vermindertem Druck, zu entfernen. Denn durch die Anwesenheit des Lösungsmittels wird vielfach die Dispergierung erleichtert.

Die wäßrigen Dispersionen dienen in bekannter Weise vor allem zur Behandlung von Fasermaterialien, insbesondere von Textilmaterial, um diesen öl- und/oder wasserabweisende, oder auch "Soil Release", - Eigenschaften zu verleihen. Dabei können sie nach den in der Textilindustrie bekannten Methoden, sei es im Foulard- oder Beschichtungsverfahren, selbstverständlich auch in Kombination mit anderen in der Textilindustrie üblichen Hilfsmitteln kombiniert angewandt werden.

Die Erfindung sei nun anhand von Beispielen erläutert.

### Beispiel 1

Ein Rührautoklav, ausgestattet mit Mantelheizung, Thermometerhülse, Belüftungs- und Bodenablaßventil wird nacheinander mit folgenden Komponenten beschickt:
455,2 g = 0,800 mol Tetrahydroperfluoralkylmercaptan (Zusammensetzung siehe unten)
106,0 g = 0,404 mol 2,2-Bis-(brommethyl)-1,3-propandiol
116,0 g =0,840 mol Kaliumcarbonat
120,0 g Methylisobutylketon
160,0 g entmineralisiertes Wasser
8,0 g = 0,044 mol Tetraethylammoniumchlorid-monohydrat.

Das verwendete Mercaptan entspricht der Formel R_{f}CH₂CH₂SH, worin R_{f} im wesentlichen für C₈F₁₇- bis C₁₄F₂₉- steht, mit einer mittleren Molmasse von 569 und einem Fluorgehalt von 68,6%.

Das Reaktionsgefäß wird unter Rühren auf 60°C Innentemperatur erwärmt, bis alle Feststoffe gelöst sind. Anschließend wird auf 300 mbar evakuiert und dann mit Stickstoff auf Normaldruck entlastet. Dieser Arbeitsgang wird noch zweimal wiederholt.
Nach Verschließen des Gefäßes wird unter Rühren bei einer Manteltemperatur von 120°C nach 1,5 Stunden eine Innentemperatur von 110°C erreicht, wobei sich ein Druck von 2,5 bar einstellt. Nach weiteren 5 Stunden unter den gleichen Reaktionsbedingungen ist die Umsetzung beendet.

Nach Abkühlen auf 100°C wird das Rührwerk ausgeschaltet, wobei sich nach wenigen Minuten zwei völlig getrennte flüssige Phasen bilden. Durch das Bodenventil wird zunächst die untere, wässerige Phase entfernt und anschließend die Lösungsmittelphase, welche das Reaktionsprodukt der Formel III (E = CH₂-CH₂-, X' = -S-) enthält, in einen Destillationskolben abgelassen.

Eine Probe der Lösemittelphase zeigt bei der gaschromatographischen Analyse einen Umsetzungsgrad von 92 % an, das bedeutet, daß 92 % des eingesetzten Mercaptans zu dem gewünschten S,S'-Bis-(perfluoralkylethyl)-dithiopentaerythrit umgesetzt worden sind.

Nach Zugabe von 700 g Methylisobutylketon wird anschließend zur Entfernung des Restwassers soweit azeotrop ausdestilliert, bis sich eine 50 %ige Lösung des Reaktionsproduktes gebildet hat. Ihr Wassergehalt liegt (bestimmt nach Karl Fischer) unter 0,05 %.

Nach Überführung der Lösung in einen 6-Liter-5-Halskolben, welcher mit Rührer, Thermometer, Stickstoffzuleitung, Rückflußkühler, Zulaufgefäß und Heizvorrichtung ausgestattet ist, wird - 2. Reaktionsstufe - eine Lösung von 67,0 g (0,318 mol) Trimethylhexamethylendiisocyanat (Isomerengemisch) in 67,0 g Methylisobutylketon unter gleichmäßigem Rühren und unter Inertbedingungen (Stickstoffspülung) über das Zulaufgefäß zugegeben und die Lösung auf 80°C erwärmt. In die homogene Mischung werden nun als Katalysator für die Polyurethan-Bildung
- 0,3 g Dibutylzinndilaurat sowie
- 0,12g Triethylamin
nacheinander eingetragen.

Nach kurzer Zeit tritt eine exotherme Reaktion, Temperaturanstieg bis ca. 90°C, ein. Das Reaktionsgemisch wird dann so lange bei ca. 85°C gerührt, bis keine Isocyanatgruppen mehr vorhanden sind (Nachweis durch IR-Spektroskopie).

In der 3. Reaktionsstufe werden unmittelbar anschließend bei derselben Temperatur von 85°C
- 157,0 g = 0,262 mol DDI - 1410 Diisocyanat® (Henkel Corp.)
- 20,5 g = 0,172 mol N-Methyldiethanolamin und
- 30,0 g Methylisobutylketon
über das Zulaufgefäß zugegeben.

Das Reaktionsgemisch wird dann so lange bei ca. 85°C gerührt, bis keine Isocyanatgruppen mehr vorhanden sind (Nachweis durch IR-Spektroskopie). Die Bildung des Polyurethans ist damit abgeschlossen.

Das Reaktionsprodukt (Polyurethan) kann je nach weiterem Verwendungszweck isoliert oder mittels einer oberflächenaktiven Substanz in eine wässerige Dispersion überführt werden. Durch anschließendes Entfernen des Lösemittels erhält man eine lagerstabile Dispersion.

Zur Dispergierung wird die Lösung, aus der sich das Reaktionsprodukt beim Abkühlen teilweise ausscheidet, auf etwa 70°C erwärmt und nach Bedarf mit weiterem Lösungsmittel verdünnt und in eine auf 70°C erwärmte wäßrige Lösung, enthaltend 75 g eines ethoxylierten Lauryloxypropylamins (je Mol durchschnittlich 10 Mol Ethylenoxid angelagert) in Form des Acetats und 100 g 1,3-Propandiol, einturbiniert. Nach Homogenisierung bei 300 bar und anschließender Entfernung des Lösungsmittels erhält man eine gelbliche milchige, dünnflüssige stabile Dispersion, die für sich angewandt oder - wie in der Literatur beschrieben - durch Zusatz von Extendern - auf textilem Substrat hervorragende wasser- und ölabweisende Eigenschaften ergibt.

### Bespiel 2

Die im Beispiel 1 verwendete Apparatur wird mit folgenden Komponenten beschickt
- 480,0 g = 1.000 mol Tetrahydroperfluoralkylmercaptan (Zusammensetzung s. u.)
- 132,5 g = 0.505 mol 2,2-Bis-(brommethyl)-1,3-propandiol
- 145,0 g = 1.050 mol Kaliumcarbonat
- 150,0 g Methylisobutylketon
- 200,0 g entmineralisiertes Wasser
- 8,5 g = 0.055 mol Tetramethylammoniumbromid.

Das verwendete Meraptan entspricht der Formel R_{f} CH₂ CH₂ SH, worin R_{f} im wesentlichen für C₈F₁₇ steht, mit einem Anteil von 5 % an C₆F₁₃ CH₂ CH₂ SH und geringen Anteilen höherer Mercaptane (mittlere Molmasse ca. 480, Fluorgehalt 66,9 %).
Die erste Reaktionsstufe wird, wie im Beispiel 1 angegeben, durchgeführt.
Aufgrund der gaschromatischen Analyse wird ein Umsetzungsgrad von 90 % festgestellt. Nach Zugabe von 700 g Methylisobutylketon wird wie in Beispiel 1 weiterverfahren. Der Restwassergehalt liegt bei 0,04 %.

Die Lösung, die 50 Gew.% der Verbindung III (E = -CH₂ CH₂-, X' = -S-, n = 1, R_{f} siehe oben) enthält, wird mit 83,8 g = (0,40 mol) Trimethylhexamethylendiisocyanat, gelöst in 83,0 g Methylisobutylketon versetzt und auf 80 °C erwärmt. Zu der homogenen Mischung werden als Katalysator
0,4 g Zinnoctoat, sowie anschließend
0,1 g Triethylamin
zugefügt.

Nach kurzer Zeit steigt die Temperatur auf 90 °C an. Das Gemisch wird solange bei 85 °C gerührt, bis keine Isocyanatgruppen mehr nachweisbar sind, (Ende der 2. Reaktionsstufe). Unmittelbar anschließend daran werden bei 85 °C
196,2 g (0,33 mol) DDI-1410 Diisocyanat und
22,8 g (0,22 mol) Diethylenglykol und
30,0 g Methylisobutylketon
hinzugefügt.

Dann wird wieder solange bei 85 °C gerührt, bis keine Isocyanatgruppen mehr nachweisbar sind. Die Bildung des Polyurethans ist abgeschlossen.

Zur Emulgierung der erhaltenen Polyurethanlösung wird wie nach Beispiel 1 verfahren, wobei lediglich von dem dort genannten Emulgator 83 g sowie 115 g 1,3-Propandiol zum Einsatz kommen.
Nach Homogenisierung und Entfernung des Lösungsmittels erhält man eine milchige, dünnflüssige, stabile Dispersion.

## Patentansprüche

1. Verfahren zur Herstellung von Perfluoralkylreste enthaltenden Diolen, wobei (erste Reaktionsstufe)
Verbindungen der allgemeinen Formel (I)
R_{f}-(E)ₘ-X'-H (I)
worin m = 0 oder 1 und R_{f} ein geradkettiger oder verzweigtkettiger Perfluoralkylrest mit 1 bis 18 C-Atomen sind, der gegebenenfalls durch einen Perfluoralkoxyrest mit 2 bis 6 C-Atomen substituiert ist, worin E ein verzweigter oder geradkettiger Alkylenrest mit 1 bis 10 Kohlenstoffatomen ist, der gegebenenfalls durch 1 bis 3 Gruppen unterbrochen ist, nämlich durch jeweils zweiwertige Brückenglieder der Formeln
-NR-,-O-,-S-,-SO₂-,-COO-,-OOC-,-CONR-,-NRCO-,-SO₂NR- und -NRSO₂-, und der gegebenenfalls an einem Ende eine -SO₂NR- oder eine -CONR-Gruppe aufweist, wobei der Rest R_{f} mit dem Schwefelatom oder dem Kohlenstoffatom dieser Gruppe verknüpft ist,
wobei X'-H = -CON(R)H oder SO₂N(R)H oder -SH ist und R einen Alkylrest mit 1 bis 6 C-Atomen bedeutet, mit Verbindungen der allgemeinen Formel II
HO [CH₂-C(CH₂Y)₂CH₂O] ₙH (II)
worin Y = Cl, Br oder J bedeuten und n = 1, 2 oder 3 ist und wobei je Mol-Äquivalent Y der Formel II ca. 1 Mol der Verbindung der Formel I eingesetzt werden, in Gegenwart von Alkalicarbonat in einer Menge, die zur im wesentlichen vollständigen Neutralisation der entstehenden Säure HY ausreicht, in einem aprotischen Lösungsmittel bei erhöhter Temperatur zu Diolen der Formel III 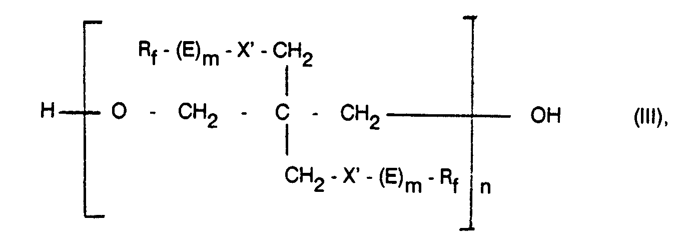 umgesetzt werden, dadurch gekennzeichnet, daß man die Umsetzung bei einer Temperatur im Bereich von 90 bis 140°C in einem in Wasser im wesentlichen unlöslichen, aprotischen Lösungsmittel in Gegenwart einer wäßrigen Lösung des Alkalicarbonates, gegebenenfalls in Gegenwart eines Phasengrenzflächen-Katalysators durchführt, wobei das aprotische Lösungsmittel so ausgewählt ist, daß aus ihm beim Erhitzen in Gegenwart der wäßrigen Alkalicarbonat-Lösung keine Produkte gebildet werden, die waserlöslich sind oder mit den Verbindungen der Formel I oder II reagieren oder die das entstehende Alkalihalogenid lösen, daß man anschließend die sich abscheidende wäßrige Salzlösung abtrennt und das verbleibende Restwasser und gegebenenfalls das Lösungsmittel entfernt.

2. Verfahren nach Patentanspruch 1, dadurch gekennzeichnet, daß die nach der ersten Reaktionsstufe erhaltenen Umsetzungsprodukte (Diole) der Formel III ohne Zwischenisolierung in einer 2. Stufe mit zwei-, drei- oder mehrwertigen aliphatischen, alicyclischen oder aromatischen Isocyanaten, insbesondere mit zweiwertigen Isocyanaten der Formel IV
A (NCO)₂ (IV)
worin A für einen,ggfs. substituierten, aliphatischen, alicyclischen oder aromatischen zweiwertigen Rest steht, in einem Lösungsmittel zu Präpolymeren umgesetzt werden, die noch freie Hydroxyl- oder freie Isocyanatgruppen enthalten, und daß in einer 3. Stufe diese Präpolymeren ohne Zwischenisolierung mit weiterem zwei-, drei- oder mehrwertigem, aliphatischen, alicyclischen oder aromatischen Isocyanat, insbesondere mit zweiwertigem Isocyanat der Formel
A' (NCO)(₂ (IV')
worin A' die gleiche Bedeutung wie A hat, oder mit einem mindestens 2 Hydroxylgruppenenthaltendem Kettenverlängerungsmittel oder auch einer Kombination aus weiterem Isocyanat und einem solchen Kettenverlängerungsmittel in einem Lösungsmittel zu Perfluoralkylgruppen enthaltenden Polyurethanen umgesetzt werden und daß gegebenenfalls anschließend das Lösungsmittel entfernt wird.

3. Verfahren nach Patentanspruch 1 oder 2, dadurch gekennzeichnet, daß man die Konzentration des Alkalicarbonats in Wasser mindestens so hoch einstellt, daß die Dichte der sich bei der Reaktion bildenden Alkalihalogenid-Lösung nach Beendigung der Herstellung der Umsetzungsprodukte der Formel III (erste Reaktionsstufe) so hoch ist, daß sich die wäßrige Phase als untere Phase abscheidet.

4. Verfahren nach einem oder mehreren der Patentansprüche 1 bis 3, dadurch gekennzeichnet, daß man als Alkalicarbonat Kaliumcarbonat einsetzt.

5. Verfahren nach einem oder mehreren der Patentansprüche 1 bis 4, dadurch gekennzeichnet, daß die Umsetzung der Verbindungen der Formel (I) mit Verbindungen der Formel II (erste Reaktionsstufe) unter erhöhtem Druck durchgeführt wird.

6. Verfahren nach Patentanspruch 5, dadurch gekennzeichnet, daß die Reaktion unter autogenem Druck ausgeführt wird.

7. Verfahren nach einem oder mehreren der Patentansprüche 2 bis 6, dadurch gekennzeichnet, daß in der 1., 2. und 3. Reaktionsstufe jeweils das gleiche Lösungsmittel verwendet wird.

8. Verfahren nach einem oder mehreren der Patentansprüche 1 bis 7, dadurch gekennzeichnet, daß das für die Umsetzung der ersten Stufe verwendete Lösungsmittel bei Normaldruck einen Siedepunkt über 90°C, insbesondere über 110°C aufweist.

9. Verfahren nach einem oder mehreren der Patentansprüche 1 bis 8, dadurch gekennzeichnet, daß als aprotisches Lösungsmittel Methylisobutylketon verwendet wird.

10. Verfahren nach einem oder mehreren der Patentansprüche 1 bis 9, dadurch gekennzeichnet, daß als Verbindung der Formel II die Verbindung eingesetzt wird, in der Y = Br und n = 1 ist.

11. Verfahren nach einem oder mehreren der Patentansprüche 1 bis 10, dadurch gekennzeichnet, daß in Formel I E = ein Alkylenrest mit 2 bis 6, insbesondere mit 2 C-Atomen, X' = -S- und m = 1 ist.

12. Verfahren nach einem oder mehreren der Patentansprüche 2 bis 11, dadurch gekennzeichnet, daß als Verbindung IV Hexamethylendiisocyanat oder Trimethylhexamethylendiisocyanat und als Verbindung IV' ein alicyclisches Diisocyanat mit 6 bis 15 Kohlenstoffatomen im Ring oder ein von einer dimerisierten ungesättigten Fettsäure abgeleitetes Diisocyanat eingesetzt wird.

13. Verfahren nach einem oder mehreren der Patentansprüche 2 bis 12, dadurch gekennzeichnet, daß als Kettenverlängerungsmittel N-Methyl-diethanolamin oder N-Butyldiethanolamin eingesetzt wird.

14. Verfahren nach einem oder mehreren der Patentansprüche 2 bis 13, dadurch gekennzeichnet, daß in der zweiten Stufe zur Reaktion mit 1 Mol Isocyanat der Formel IV von der nach der ersten Stufe erhaltenen Lösung eine Menge eingesetzt wird, die 1,1 bis 1,6 Mol einer Verbindung III enthält.

15. Verfahren nach Patentanspruch 14, dadurchgekennzeichnet, daß das Molverhältnis der Isocyanate der zweiten Reaktionsstufe (IV) zu den Isocyanaten der dritten Reaktionsstufe (IV') 0,3 bis 1,8, insbesondere 0,6 bis 1,6 beträgt.

## Claims

1. Process for the preparation of diols containing perfluoroalkyl radicals, wherein (first reaction stage) compounds of the general formula (I)
R_{f}-(E)ₘ-X'-H (I)
in which m = 0 or 1 and R_{f} is a straight-chain or branched-chain perfluoroalkyl radical having 1 to 18 C atoms, which is optionally substituted by a perfluoroalkoxy radical having 2 to 6 C atoms, in which E is a branched or straight-chain alkylene radical having 1 to 10 carbon atoms, which is optionally interrupted by 1 to 3 groups, that is to say by in each case divalent bridge members of the formulae
-NR-, -O-, -S-, -SO₂-, -COO-, -OOC-, -CONR-, -NRCO-, -SO₂NR- and -NRSO₂- and which optionally contains an -SO₂NR- or a -CONR- group on one end, the radical R_{f} being linked to the sulphur atom or the carbon atom of this group,
where X'-H = -CON(R)H or SO₂ N(R)H or -SH and R denotes an alkyl radical having 1 to 6 C atoms, are reacted with compounds of the general formula II
HO[CH₂-C(CH₂Y)₂CH₂O]ₙH (II)
in which Y = Cl, Br or I and n = 1, 2 or 3, approximately 1 mol of the compound of the formula I being employed per molar equivalent of Y in the formula II, in the presence of an alkali metal carbonate in an amount which is sufficient for essentially complete neutralization of the acid HY formed, in an aprotic solvent at elevated temperature to give diols of the formula III 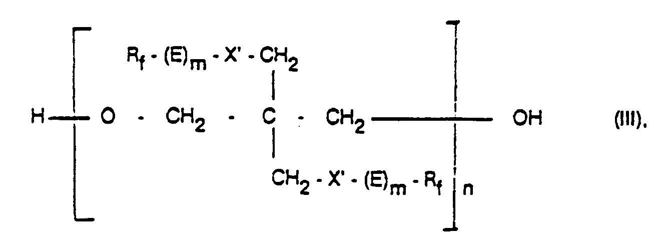 characterized in that the reaction is carried out at a temperature in the range from 90 to 140°C in an aprotic solvent which is essentially insoluble in water in the presence of an aqueous solution of the alkali metal carbonate, if appropriate in the presence of a phase boundary catalyst, the aprotic solvent being chosen such that, during heating in the presence of the aqueous alkali metal carbonate solution, no products are formed from it which are water-soluble or react with the compounds of the formula I or II or which dissolve the alkali metal halide formed, and in that the aqueous salt solution which separates out is then separated off and the residual water which remains and, if appropriate, the solvent are removed.

2. Process according to Patent Claim 1, characterized in that the reaction products (diols) of the formula III obtained after the first reaction stage are reacted, without intermediate isolation, in a second stage with di-, tri- or polyvalent aliphatic, alicyclic or aromatic isocyanates, in particular with divalent isocyanates of the formula IV
A(NCO)₂ (IV)
in which A represents an optionally substituted aliphatic, alicyclic or aromatic divalent radical, in a solvent to give prepolymers which still contain free hydroxyl or free isocyanate groups, and in that in a third stage these prepolymers are reacted, without intermediate isolation, with further di-, tri- or polyvalent aliphatic, alicyclic or aromatic isocyanate in particular with divalent isocyanate of the formula
A'(NCO)₂ (IV')
in which A' has the same meaning as A, or with a chain-lengthening agent which contains at least two hydroxyl groups, or also a combination of further isocyanate and such a chain-lengthening agent, in a solvent to give polyurethanes containing perfluoroalkyl groups, and in that, if appropriate, the solvent is then removed.

3. Process according to Patent Claim 1 or 2, characterized in that the concentration of the alkali metal carbonate in water is at least high enough such that, when the preparation of the reaction products of the formula III has ended (first reaction stage), the density of the alkali metal halide solution which forms during the reaction is high enough for the aqueous phase to separate out as the lower phase.

4. Process according to one or more of Patent Claims 1 to 3, characterized in that potassium carbonate is employed as the alkali metal carbonate.

5. Process according to one or more of Patent Claims 1 to 4, characterized in that the reaction of the compounds of the formula (I) with compounds of the formula II (first reaction stage) is carried out under elevated pressure.

6. Process according to Patent Claim 5, characterized in that the reaction is carried out under the autogenous pressure.

7. Process according to one or more of Patent Claims 2 to 6, characterized in that in each case the same solvent is used in the first, second and third reaction stages.

8. Process according to one or more of Patent Claims 1 to 7, characterized in that the solvent used for the reaction of the first stage has a boiling point under normal pressure of above 90°C, in particular above 110°C.

9. Process according to one or more of Patent Claims 1 to 8, characterized in that methyl isobutyl ketone is used as the aprotic solvent.

10. Process according to one or more of Patent Claims 1 to 9, characterized in that the compound in which Y = Br and n = 1 is employed as the compound of the formula II.

11. Process according to one or more of Patent Claims 1 to 10, characterized in that, in formula I, E = an alkylene radical having 2 to 6, in particular 2 C atoms, X' = -S- and m = 1.

12. Process according to one or more of Patent Claims 2 to 11, characterized in that hexamethylene diisocyanate or trimethylhexamethylene diisocyanate is employed as the compound IV and an alicyclic diisocyanate having 6 to 15 carbon atoms in the ring or a diisocyanate derived from a dimerized unsaturated fatty acid is employed as the compound IV'.

13. Process according to one or more of Patent Claims 2 to 12, characterized in that N-methyl-diethanolamine or N-butyldiethanolamine is employed as the chain-lengthening agent.

14. Process according to one or more of Patent Claims 2 to 13, characterized in that an amount of solution obtained after the first stage which contains 1.1 to 1.6 mol of a compound III is employed for reaction with 1 mol of isocyanate of the formula IV in the second stage.

15. Process according to Patent Claim 14, characterized in that the molar ratio of the isocyanates of the second reaction stage (IV) to the isocyanates of the third reaction stage (IV') is 0.3 to 1.8, in particular 0.6 to 1.6.

## Revendications

1. Procédé de préparation de diols contenant des groupes perfluoroalkyle, dans lequel (premier stade de réaction)
des composés de formule générale (I) :
R_{f}(E)ₘ-X'-H (I)
dans laquelle m = 0 ou 1 et R_{f} est un groupe perfluoroalkyle à chaîne droite ou ramifiée ayant 1 à 18 atomes de carbone, qui est substitué éventuellement par un groupe perfluoroalcoxy ayant 2 à 6 atomes de carbone, E est un groupe alkylène à chaîne ramifiée ou droite ayant 1 à 10 atomes de carbone, qui est éventuellement interrompu par 1 à 3 groupes, à savoir, respectivement, par des chaînons de pontage bivalents de formules :
-NR-, -O-, -S-, -SO₂-,-COO-, -OOC-, CONR-, NRCO-, -SO₂NR-, et NRSO₂ et qui porte éventuellement à une extrémité un groupe -SO₂NR- ou un groupe -CONR-, le groupe R_{f} étant combiné à l'atome de soufre ou à l'atome de carbone de ce groupe,
X'-H est un groupe -CON(R)H ou SO₂N(R)H ou -SH et R est un groupe alkyle ayant 1 à 6 atomes de carbone, sont convertis avec des composés de formule générale II :
HO[CH₂-C(CH₂Y)₂CH₂O]ₙH (II)
dans laquelle Y = Cl, Br ou J et n = 1, 2 ou 3, en utilisant par équivalent molaire de Y de la formule II environ 1 mole du composé de formule I, en présence de carbonate alcalin en quantité suffisante pour neutraliser de manière sensiblement complète l'acide formé HY, dans un solvant aprotique à température élevée, en diols de formule III : 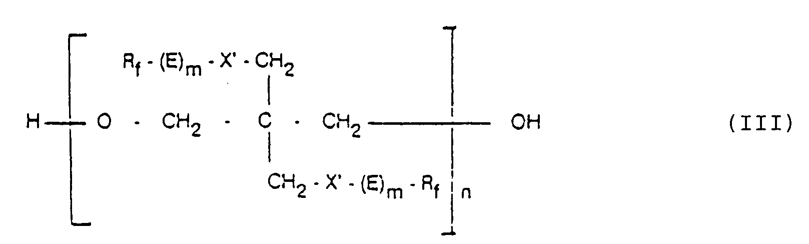 caractérisé en ce que l'on effectue la conversion à une température dans la plage de 90 à 140°C dans un solvant aprotique sensiblement non soluble dans l'eau, en présence d'une solution aqueuse du carbonate alcalin, éventuellement en présence d'un catalyseur d'interphase, le solvant aprotique étant choisi de telle sorte qu'il ne forme lors d'un chauffage en présence de la solution aqueuse de carbonate alcalin aucun produit qui soit soluble dans l'eau ou réagisse avec les composés de formule I ou II ou dissolve l'halogénure alcalin formé, on enlève ensuite la solution de sel aqueuse séparée et on élimine l'eau résiduelle qui subsiste et éventuellement le solvant.

2. Procédé selon la revendication 1, caractérisé en ce que l'on fait réagir les produits de conversion (diols) de formule III obtenus après le premier stade réactionnel sans isolement intermédiaire au cours d'un deuxième stade avec des isocyanates aliphatiques, alicycliques ou aromatiques bivalents, trivalents ou polyvalents, en particulier avec des isocyanates bivalents de formule IV :
A(NCO)₂ (IV)
dans laquelle A désigne un groupe bivalent aliphatique, alicyclique ou aromatique éventuellement substitué, dans un solvant, en prépolymères, qui contiennent encore des groupes hydroxyle ou isocyanate libres, et ces prépolymères sont convertis au cours d'un troisième stade sans isolement intermédiaire avec un autre isocyanate aliphatique, alicyclique ou aromatique bivalent, trivalent ou polyvalent , en particulier avec un isocyanate bivalent de formule :
A'(NCO)₂ (IV')
dans laquelle A' a la même signification que A, ou avec un agent d'allongement de chaîne contenant au moins deux groupes hydroxyle ou également une combinaison d'un autre isocyanate et d'un tel agent d'allongement de chaîne, dans un solvant, en polyuréthannes contenant des groupes perfluoroalkyle et le solvant est ensuite éventuellement éliminé.

3. Procédé selon la revendication 1 ou 2, caractérisé en ce que l'on règle la concentration du carbonate alcalin dans l'eau au moins à une valeur assez élevée pour que la densité de la solution d'halogénure alcalin qui se forme au cours de la réaction soit, à la fin de la production des produits de conversion de formule III (premier stade réactionnel), assez élevée pour que la phase aqueuse se sépare sous la forme d'une phase inférieure.

4. Procédé selon une ou plusieurs des revendications 1 à 3, caractérisé en ce que l'on utilise du carbonate de potassium comme carbonate alcalin.

5. Procédé selon une ou plusieurs des revendications 1 à 4, caractérisé en ce que la réaction des composés de formule (I) avec les composés de formule II (premier stade réactionnel) est réalisée à pression élevée.

6. Procédé selon la revendication 5, caractérisé en ce que la réaction est effectuée sous pression autogène.

7. Procédé selon une ou plusieurs des revendications 2 à 6, caractérisé en ce que l'on utilise dans le premier, le deuxième et le troisième stade réactionnel respectivement le même solvant.

8. Procédé selon une ou plusieurs des revendications 1 à 7, caractérisé en ce que le solvant utilisé pour la réaction du premier stade présente à pression normale un point d'ébullition supérieur à 90°C, en particulier supérieur à 110°C.

9. Procédé selon une ou plusieurs des revendications 1 à 8, caractérisé en ce que l'on utilise comme solvant aprotique la méthylisobutylcétone.

10. Procédé selon une ou plusieurs des revendications 1 à 9, caractérisé en ce que l'on utilise comme composé de formule II le composé dans lequel Y = Br et n = 1.

11. Procédé selon une ou plusieurs des revendications 1 à 10, caractérisé en ce que, dans la formule I, E est un groupe alkylène avec 2 à 6, en particulier 2 atomes de carbone, X' = -S- et m = 1.

12. Procédé selon une ou plusieurs des revendications 2 à 11, caractérisé en ce que l'on utilise comme composé IV le diisocyanate d'hexaméthylène ou le diisocyanate de triméthylhexaméthylène et comme composé IV' un diisocyanate alicyclique ayant 6 à 15 atomes de carbone dans le noyau ou un diisocyanate tiré d'un acide gras insaturé dimérisé.

13. Procédé selon une ou plusieurs des revendications 2 à 12, caractérisé en ce que l'on utilise comme agent d'allongement de chaîne la N-méthyldiéthanolamine ou la N-butyldiéthanolamine.

14. Procédé selon une ou plusieurs des revendications 2 à 13, caractérisé en ce que l'on utilise dans le deuxième stade pour réagir avec une mole d'isocyanate de formule IV une quantité de la solution obtenue après le premier stade qui contient 1,1 à 1,6 mole d'un composé III.

15. Procédé selon la revendication 14, caractérisé en ce que le rapport molaire des isocyanates du deuxième stade réactionnel (IV) aux isocyanates du troisième stade réactionnel (IV') atteint 0,3 à 1,8, en particulier 0,6 à 1,6.
